# EUROPEAN PATENT APPLICATION

(11) **EP 3 643 172 A1**
(43) Date of publication of application: **29.04.2020**
(21) Application number: 19191544.6
(22) Date of filing: 13.08.2019
(51) Int. Cl.: A01M 21/04, A01N 25/02, A01N 37/10, A01N 63/14, A01N 43/16

(54) **ECOLOGICAL HERBICIDE**

(30) Priority: 14.08.2018 IT 201800008096
(71) Applicant: Agrimachine Green Evolution S.r.l., 09129 Cagliari (CA) (IT)
(72) Inventor: Cavalli, Eugenio, 09129 Cagliari (IT)
(74) Representative: Capasso, Olga

(57) **Abstract**

The present invention falls within the field of weeding systems, in particular steam weeding systems. In particular, the invention relates to an additive liquid composition which comprises the following agents: mix of citrus fruits, sugar, propolis, wax, honey and water dosed, mixed and treated with a raw fermentation artisan process, such as to obtain a fruit vinegar, in particular a citrus vinegar.

## Description

### FIELD OF THE INVENTION

The present invention falls within the field of weeding systems, in particular steam weeding systems. In particular, the invention relates to an additive liquid composition which comprises the following agents: mix of citrus fruits, sugar, propolis, wax, honey and/or water dosed, mixed and treated with a raw fermentation artisan process, such as to obtain a fruit vinegar, in particular a citrus vinegar.

### PRIOR ART

Infesting weeds are part of the agroecosystem and therefore are to be managed at best to maintain the sustainability of biological agriculture. The choice of not using herbicides thus leads the farmer to pay particular attention to preventive techniques with the aim of creating cultivation conditions unfavourable for weeds growth and favourable for cultures growth. Under biological regime, this management therefore involves an integrated approach based on three different strategies: techniques related to prevention (pre-emergency), strategies to enhance cultures competitiveness, post-emergency strategies aimed at containing weeds.

For example, WO 2018/042391 discloses a mixture useful in particular to enhance the soil, to stimulate soil growth and as herbicide.

In addition, US 2011/0232180 refers to the use of calcium magnesium acetate to affect broadleaf weeds.

Steam weeding involves the use of water steam as a means of eliminating infesting weeds or plants from terrains, cultivations, driveways, roads, parks, etc. The heat emitted in the form of steam causes a significant thermal variation on the plant such as to destroy its cells. The effect is immediate, and the plant withers after a few hours. The main advantage of this method is to eliminate infesting weeds without using synthetic chemical substances which, especially in some sectors such as organic cultivations, are prohibited by law. Steam weeding is described, for example, in WO 94/26102.

However, steam weeding is related to practical limits such as sudden cooling of the steam, which may become a trigger for the vegetative recovery of the treated areas in favourable weather conditions.

To increase the herbicidal effect of steam, water can be enriched with an additive enhancing its performance, making it more efficient. Said enhancement consists of a time dilation of the cooling (so-called *thermal coat* effect) and a germination delay.

The reduced availability of authorized selective herbicides (Rapparini et al., 2008; Campagna et al., 2009), makes the control of infesting weeds difficult. Applying the new assessment criteria of phytosanitary products introduced by Regulation (EC) No. 1107/09 (which replaced Directive 91/414/EEC) will lead to a further reduction in the range of usable active substances, with the possible exclusion of highly important herbicide molecules, especially for minor cultures.

Therefore, there is the need to develop additives for weeding systems, which are selective, authorized and which help control the growth of infesting weeds.

### DESCRIPTION OF THE INVENTION

The authors have developed an additive composition for weeding systems, in particular steam weeding ones, which can be obtained from the following agents: mix of citrus fruits, sugar, propolis, wax, honey, water appropriately dosed and mixed together. Such additive composition is based on the surpluses of the food supply chains and is therefore completely natural. Its use in contained dosages allows to delay or slow down the vegetative recovery in the treated areas optimizing resources (water and energy for the liquid-vapour state change).

The water + additive solution (with % ranging from 0.3 v/v to 4 v/v %) can be delivered by a steam weeding system called ECO CITY AND ECO FRUIT at high temperatures comprised between 100 and 160 °C, preferably at about 140 °C.

The present invention is advantageous in that it enhances the performance of the steam alone, enhancing in particular:
- disinfectant performance: the effects are enhanced in terms of organoleptic properties compared to steam alone, namely it improves perceived disinfection;
- thermal performance: the laboratory test confirmed the time delay of the cooling curve;
- duration performance: the regermination (at the same meteorological conditions) is not hindered but not excessively slowed down yet sufficiently to give a significant visual perception, optimizing time and costs;
- biological protection performance: the steam released in the air (aerosol) does not have negative effects on the cultivations but can have a corroborating action for them.

In particular, the delivery of the water + additive solution at high temperature (100-160 °C) and pressure (20-80 bar) destroys unwanted vegetables (infestants).

The composition is in liquid formulation and can be diluted in water in the following proportions: from a minimum of 1.50 to 20.00 litres of composition every 500 litres of water, namely solutions from 0.30 v/v % up to a maximum of 4.00 v/v %. In particular, the composition is a suspension or an aqueous solution.

Thermal shock is the cause of the destruction of the infestants. The steam dispersed into the environment has a corroborating action on the cultivations and, in particular for the formulation containing the propolis agent, preferably diluted in water in the proportion of 0.30 v/v %, it can carry out a preventive action on different pathologies, such as for example:
- fruit green mold (*penicillium digitatum*);
- weeping mildred (*sphaeroteca pannosa*);
- powdery mildew (*uncinula necator*);
- vine grey mold (*botrytis cinerea*);
- peacock spot (*cycloconium oleaginum*);
- olive knot disease (*psedomonas savastanoi*);
- downy mildew (*phitophtora infestans*);
- vine downy mildew (*plasmopora viticola*);
- antennaria elaeophila of the olive tree;
- bacterial infections, for example by Xylella;
   and on different insects or parasites, such as for example;
- green peach aphid (*myzoides persicae*);
- the rose aphid;
- the woolly aphid.

The composition object of the present invention provides several technical advantages compared to what has been commercially available so far.

Surprisingly and advantageously, the composition modifies the thermal capacity of water. In particular, it has been shown that when the composition is added to water in a dosage of 1.50 litres of composition every 500 litres of water (0.30% v/v) a time delay is produced in the cooling process estimated at around +15-20%. Therefore, heat is retained longer on the plants (*thermal coat* effect), enhancing the thermal shock effect typical of steam weeding. Furthermore, the particular choice of the agents and of their mixing process combined with the acidity of the solution (pH < 4.00) contributes to the germination delay, reducing the number of total steps and the relative costs compared to the traditional steam weeding system.

The presence of agents such as propolis (whose phenolic nature exerts phytostimulant properties), provides the composition of the invention with the following properties:
- anticryptogamic preventive action;
- antiparasitic preventive action;
- disinfectant action for the organoleptic properties;
- corroborating action for the cultivations.

In addition to the phytostimulant action of propolis, the caustic action typical of fruit and wine vinegars may occur.

Since the composition has been developed with ingredients that are absolutely harmless and non-toxic for the soil, there is no risk of contaminating the aquifers associated with its use.

The presence of citrus fruits alters the pH of the composition, creating conditions that can cause a germination delay. The presence of propolis, on the other hand, gives the composition (released in the air) the phytostimulant action and the anticryptogamic and antiparasitic preventive action for the cultivations. For these reasons, the propolis ingredient is used in those areas where its effects can occur. If the aim is only the removal of infestants, it is better to use the additive that does not include propolis, namely non-cultivated rural areas and urban areas.

The disinfectant properties, which add to the typical advantages of delivery at high temperature, make the composition of the invention particularly suitable for sensitive areas such as: parks, schools, kindergartens, sport facilities, cemeteries, etc.

Overall, the present composition provides the following advantageous technical effects: it enhances the weeding effects by time dilation of the cooling and the acidic properties of the solution; it has a corroborating action for the cultivations present in the field as well as carrying out an antiparasitic and anticryptogamic preventive action. Therefore, the composition of the invention can be used in an ecological weeding method and/or system. Advantageously, the composition of the invention combines the fight against infesting weeds with the phytostimulant action of cultivations without residues on soil (and aquifers). Therefore, it is possible to carry out weeding both in rural and urban areas with accurate interventions and without any kind of repercussion or consequence on cultivations and people.

The composition of the invention is a basic substance exempt from authorization under Article 28, paragraph 2, lett. a) of Regulation (EC) no. 1107/2009 of the European Parliament and of the Council of 21 October 2009 concerning the placing on the market of phytosanitary products and repealing Council directives 79/117/EEC and 91/414/EEC. Therefore, it is an object of the present invention the use of a liquid composition as an additive for a weeding system, said composition comprising at least one agent selected from the group consisting of: natural acid, propolis, wax and honey.

In particular, it is an object of the present invention the use of a liquid composition as an additive for a weeding system, said composition comprising at least one agent selected from the group consisting of: natural acid, propolis, wax and honey, said composition being applied by steam delivery. By "applied by steam delivery", it is meant that the weeding system is a steam weeding system. It is also to be understood that the wax may be present as part of the propolis, therefore the wax is an optional component and could be removed from any embodiment. Therefore, in a preferred embodiment, the invention relates to the use of a liquid composition as an additive for a weeding system, said composition comprising at least one agent selected from the group consisting of: natural acid, propolis and honey, said composition being applied by steam delivery.

Preferably, the composition according to the invention further comprises sugar and/or water. Preferably, the sugar is cane sugar.

Preferably, the natural acid derives from a fruit. Preferably, the natural acid derives exclusively from a fruit. Even more preferably, said fruit is a citrus fruit or a mixture of citrus fruits. Preferably, said citrus fruit is selected from the group consisting of: lemon (*citrus limon*), pompia (*citrus monstruosa*), *Citrus assamensis, Citrus aurantiaca, Citrus aurantiifolia* (key lime), *Citrus australasica* (finger lime), *Citrus australis* (Australian lime), *Citrus cavaleriei, Citrus garrawayi* (Mount White lime), *Citrus glauca, Citrus gracilis, Citrus halimii, Citrus hystrix* (kaffir lime or combava), *Citrus indica, Citrus inodora, Citrus japonica* (kumquat), *Citrus junos* (yuzu orange), *Citrus khasya, Citrus latipes* (Khasi papeda), *Citrus lucida, Citrus maxima* (pomelo), *Citrus medica* (cedar), *Citrus mitis, Citrus nobilis, Citrus paradisi* (grapefruit), *Citrus polyandra, Citrus reticulata* (mandarin), *Citrus sinensis* (sweet orange) *Citrus swinglei, Citrus trifoliata* (trifoliate orange), *Citrus warburgina* and *Citrus wintersii.* More preferably, said citrus fruit is lemon (*citrus limon*) or pompia (*citrus monstruosa*).

Preferably, the composition comprises at least two agents selected from the group consisting of: natural acid, propolis, wax and honey. Preferably, the composition comprises at least three agents selected from the group consisting of: natural acid, propolis, wax and honey. Preferably, the composition comprises or consists of natural acid, propolis, wax and honey. Preferably, the composition comprises or consists of natural acid, water and sugar. Preferably, the composition comprises or consists of natural acid, sugar, propolis, wax, honey and water.

Preferably, the composition comprises or consists of: natural acid derived exclusively from a mixture of citrus fruits, water, sugar and optionally at least one agent selected from the group consisting of: propolis, honey, wax and a mixture thereof. More preferably, the composition comprises or consists of: natural acid derived exclusively from a mixture of citrus fruits, water, sugar and optionally at least one agent selected from the group consisting of: propolis, honey and a mixture thereof.

Preferably, the composition comprises or consists of:
- natural acid derived exclusively from a mixture of citrus fruits, sugar and water; or
- natural acid derived exclusively from a mixture of citrus fruits, sugar, propolis, and water; or
- natural acid derived exclusively from a mixture of citrus fruits, sugar, propolis, wax, honey and water.

Preferably, said propolis (together with the wax contained therein) is in a maximum amount of about 750 g. In particular, said propolis (together with the wax contained therein) may be in a maximum amount of about 750 g every 5 litres of water.

Preferably, said sugar and honey are in an amount of about 1 kg. In particular, the sum of said honey and sugar is in an amount of about 1 kg every 5.00 litres of water.

Preferably, said water is in an amount of about 5.00 L.

Preferably, said citrus fruits are in an amount of about 1500 g.

Even more preferably, the composition comprises or consists of:
- about 1500 g of citrus fruits, about 5.00 litres of water and about 1 kg of cane sugar; or
- about 1500 g of citrus fruits, about 5.00 litres of water, about 1 kg of cane sugar and about 750 g of propolis; or
- about 1500 g of citrus fruits, about 5.00 litres of water, about 1 kg of cane sugar and about 750 g of a mix of wax, honey and propolis.

Still preferably, steam delivery is performed by water and/or the composition is in an amount from about 1.00 to 25.00 L per every 500.00 L of water used to deliver steam. Preferably, the composition is in an amount from about 1.50 L to about 20.00, more preferably of about 1.50, per every 500.00 L of water used to deliver steam.

In a preferred embodiment, the composition of the invention has an acidic pH. Preferably, the composition has a pH lower than 7, preferably lower than 5, preferably lower than or equal to 4, preferably lower than or equal to 3.5. More preferably, the composition has a pH lower than or equal to 4.

Preferably, the composition is applied by steam delivery. Preferably, the composition is applied at a temperature of at least 100°, preferably comprised between 100 °C and 200 °C, preferably comprised between 100 °C and 160 °C, preferably of at least or about 120 °C, preferably of at least or about 140 °C. More preferably, the composition is applied at a temperature comprised between 100 °C and 160 °C.

Preferably, the composition is applied at a high pressure, preferably at a pressure equal to or greater than 10 bar, preferably at a pressure comprised between 20 and 80 bar. More preferably, the composition is applied at a pressure comprised between 20 and 80 bar. More preferably, the composition is applied by steam delivery at a temperature comprised between 100 °C and 160 °C and at a pressure comprised between 20 and 80 bar. Preferably, the composition produces a time delay in the cooling process estimated at about 15-20%, preferably about 15%.

Preferably, the composition produces a time delay of regermination compared to the use of steam alone.

In a preferred embodiment, the present invention provides the use of a composition as defined above as a weeding system.

The present invention also provides a weeding system comprising an additive, said additive comprising at least one agent selected from the group consisting of: natural acid, propolis, wax and honey. Preferably, said additive further comprises sugar and/or water. Preferably, said additive comprises or consists of the composition as defined above. More preferably, said additive corresponds to the composition as defined above.

As used herein, the term "to weed" or "weeding" refers to the decrease and/or removal and/or prevention of the growth of unwanted vegetables, also known as "infestants" or "grass weeds" or "weeds". A "herbicide" is a product capable of weeding.

The "infestants" or "grass weeds" or "weeds" can in turn be defined as vegetables of little or no agricultural value, which spread damaging or killing useful plants, such as for example cultivation plants, and/or damaging animals, for example accentuating the problem of allergies in humans.

In particular, in the present invention, the weeding is by steam. In the present context, the expression "steam weeding" refers to a system and/or a method wherein a high temperature liquid or steam, preferably of at least 100 °C, preferably of at least 120 °C, preferably of at least 140 °C, preferably of at least 150 °C, is used for weeding.

The components of the composition are obtained from waste and certified products. In particular, the waste coming from apiculture are clean but raw parts that are not convenient for the apiculturist to refine for food retail. Citrus fruits are commercially available.

As used herein, the expression "natural acid" refers to an agent with an acidic pH (pH ≤ 7.0) derived from a natural process, such as fermentation. The natural acid therefore comes from a natural extract. Examples of natural acids include but are not limited to: fruit vinegar, preferably citrus vinegar, wine vinegar and citric acid. Fruit vinegar in general and wine vinegar within the limits of acetic acid content prescribed by law may have similar but not equivalent effects. However, it is meant to include them in the category of additives to be used in the steam weeding system. As used herein, the expression "natural acid" can also refer to a whole fruit or a part of it, for example peel, pulp, and/or seeds. Preferably, by "natural acid" it is meant a citrus fruit as defined above. Therefore, in the context of the present invention, the expressions "natural acid" and "citrus fruit" are interchangeable.

The maceration/fermentation in water of the citrus fruits takes place using a mince of all the parts and all the citrus fruits available. Examples of preferred citrus fruits include lemon and pompia (Sardinian endemic lemon), which lower the pH and contain citric acid. Any propolis, honey and/or sugar, coming from any source (e.g. animal, vegetable or other) and/or obtained by any extraction method (e.g. natural or other), can be used in the present invention.

The chemical components of propolis, honey and sugar are well known to the person skilled in the art. For example, the chemical composition of propolis and honey may be as described in Visweswara Rao Pasupuleti, et al., Oxid Med Cell Longev., 2017, 1259510, incorporated herein by reference.

Propolis is a resinous substance that bees collect from the buds and bark of plants. It is therefore a substance of purely vegetable origin, even though the bees, after harvesting, process it with the addition of wax, pollen and enzymes produced by their own organism. The colour can vary greatly in the shades of yellow, red, brown and black. The smell is strongly aromatic depending on the plant from which it is drawn. Therefore, in the present invention propolis of variable composition can be used, depending on the vegetation of origin, the season and many other factors. In any case, exemplary compositions and/or components of propolis are given below. In particular, the propolis in the present invention can include one, more or all of the following components in the indicated amounts:
- resins (45-55%),
- wax and fatty acids (25-35%),
- essential oils and volatile substances (10%),
- pollen (5%), and/or
- organic compounds and minerals (5%)

In a preferred embodiment, propolis is mainly composed of resin (50%), wax (30%), essential oils (10%), pollen (5%) and other organic compounds (5%) (Gómez-Caravaca AM, et al., J Pharm Biomed Anal., 2006, 41, 4, 1220-34).

Phenolic compounds, esters, flavonoids, terpenes, beta-steroids, aromatic aldehydes and alcohols are organic compounds potentially present in propolis (Huang S, et al., Molecules, 2014, 19, 12, 19610-32). Different flavonoids, such as pinocembrin, acacetin, chrysin, rutin, luteolin, kaempferol, apigenin, myricetin, catechin, naringenin, galangin and quercetin; phenolic acids such as caffeic acid and cinnamic acid; and stilbene derivatives such as resveratrol may be present in propolis. Furthermore, propolis may also contain important vitamins, such as vitamins B1, B2, B6, C and E and useful minerals such as magnesium (Mg), calcium (Ca), potassium (K), sodium (Na), copper (Cu), zinc (Zn), manganese (Mn) and iron (Fe). Some enzymes, such as succinic dehydrogenase, glucose-6-phosphatase, adenosine triphosphatase and acidic phosphatase may also be present in propolis (Khalil ML, Asian Pac J Cancer Prev., 2006, 7, 1, 22-31).

As used herein, by "wax" it is meant the portion of wax present in propolis. Preferably, such wax is beeswax or *cera alba,* i.e. a natural wax produced by bees of the *Apis* genus. It is a robust wax formed by a mixture of different compounds, among which for example: hydrocarbons (preferably about 14%), monoesters (preferably about 35%), diesters (preferably about 14%), triesters (preferably about 3%), hydroxy monoesters (preferably about 4%), hydroxy polyesters (preferably about 8%), acidic esters (preferably about 1%), acidic polyesters (preferably about 2%), free acids (preferably about 12%), free alcohols (preferably about 1%), etc. The chemical formula of beeswax may be approximated as C₁₅H₃₁COOC₃₀H₆₁ (Umney, Nick; Shayne Rivers (2003). Conservation of Furniture. Butterworth-Heinemann. p. 164). The main components of beeswax are preferably palmitates, palmitic acid, hydroxy palmitates and oleate esters formed by long chains (30-32 carbon atoms) of aliphatic alcohols, preferably with a 6:1 ratio between the two main components triacontanyl palmitate (myricyl palmitate) CH₃(CH₂)₂₉O-CO-(CH₂)₁₄CH₃ and cerotic acid CH₃(CH₂)₂₄COOH. Beeswax has a high melting point, preferably comprised between 62 °C and 64 °C. Preferably, the density at 15 °C varies between 0.958 and 0.970 g/cm³. Beeswax can be classified into two broad categories: European type and Eastern type. The saponification number is 3-5 for the European type and 8-9 for the Eastern type. Hydroxy octacosanyl hydroxystearate and Japanese wax may be used instead of beeswax. Honey is also known as a super saturated sugar solution. The honey in the composition of the invention is mainly composed of glucose (monosaccharide), fructose (monosaccharide) and water. Honey can also contain other types of sugars as well as acids, proteins and minerals. For example, honey may contain slightly more than 1% of sucrose (disaccharide). Preferably, honey may contain other disaccharides, preferably up to about 7%, more preferably up to about 10%. Such disaccharides include but are not limited to: maltose, sucrose, kojibiose, turanose, isomaltose and maltulose. Honey may also contain oligosaccharides, which contain more than three simple sugar subunits, often consisting of mono and disaccharides. Such oligosaccharides include but are not limited to: erlose, theanderose and panose. Preferably, honey contains about 70% or more than 60% of monosaccharides or reducing sugars. More preferably, honey contains a fructose concentration of about 40% a glucose concentration of about 30% and/or a water content of about 17%. The acidity of honey is mainly determined by the presence of gluconic acid. Preferably, honey contains about 1% of disaccharides or sucrose. Preferably, honey contains about 3 to 4% of oligosaccharides. In the present invention, in particular, natural honey composed of approximately 82.4% of carbohydrates, 38.5% of fructose, 31% of glucose, 12.9% of other sugars, 17.1% of water, 0.5% of protein, organic acids, multiminerals, amino acids, vitamins, phenols and a myriad of other minor compounds can be used. Furthermore, in the present invention, the honey can comprise small amounts of bioactive components, among which phenolic acid, flavonoid and α-tocopherol (Ferreres F., et al., Journal of the Science of Food and Agriculture, 1993, 61, 1, 121-123). The honey components having health benefits include phenolic acids, flavonoids, ascorbic acid, proteins, carotenoids and some enzymes, such as glucose oxidase and catalase (Moniruzzaman M, et al., Afr J Tradit Complement Altern Med., 2012, 9, 1, 36-42).

Unless otherwise stated, the quantities expressed as % of chemical agents that make up honey, wax and propolis are preferably quantities in % by weight.

In the present invention, the sugar can be white sugar, cane sugar or a mixture thereof. Preferably, the sugar is cane sugar. Preferably, the processing is of artisanal type and is not subject to industrial synthetic treatment of any agent. Preferably, the sugar is composed exclusively of sucrose. In other words, preferably, the term "sugar" and the term "sucrose" are interchangeable. Sucrose, commonly called sugar, is an organic compound of the disaccharide glucid family, as its molecule consists of two monosaccharides, more precisely glucose and fructose.

The present invention will be described by means of non-limiting examples, referring to the following figures:
**Fig. 1****.** Cooling curves.
**Fig. 2****.** Aerial photography.
**Fig. 3****.** View of the intervention area - May 31^{st}, 2019.
**Fig. 4****.** Subdivision in parcels of the field. Each parcel is identified with the letter Mi,j, where i indicates the row number and j the column number.
**Fig. 5****.** Delivery settings.
**Fig. 6****.** Field scheme.
**Fig. 7****.** View of the intervention area with evidence on the left of the effects produced by the sprinkling irrigation (green and developed vegetation) - August 1^{st}, 2019.
**Fig. 8****.** Data report of the Cagliari - Decimomannu (SU) weather station.
**Fig. 9****.** Columns M₁ and M₂: the differences in terms of vegetative recovery are minimal - August 1^{st}, 2019.
**Fig. 10****.** Columns M₄ (left) and M₅ (right) the differences in terms of vegetative recovery are minimal - August 1^{st}, 2019.
**Fig. 11****.** Columns M₇ (left) and M₈ (right): difference in vegetative recovery - August 1^{st}, 2019.
**Fig. 12****.** Difference between cells M_{3,8} (left) and M_{3,7} (right) with evidence of the difference in vegetative recovery - August 1^{st}, 2019.
**Fig. 13****.** Columns M₁₀ (left) and M₁₁ (right): difference in vegetative recovery.

### MATERIALS AND METHODS

### Preparation of the composition

The composition object of the present invention can be obtained according to the following procedure.

Cut the citrus fruits into small pieces, add the cane sugar and blend until a puree is obtained. Place everything in a container together with the water, close yet without preventing air passage. Let stand for ten days, mixing once a day with a wooden spoon. In the following 10 days mix every other day with a wooden spoon. Finally, let stand for ten more days. To obtain a composition comprising propolis, add 150 grams of propolis per litre and let macerate for 20 days, stirring every two days. Decant off filtering everything and let stand. The composition thus obtained can be diluted in water to obtain an aqueous composition containing from 1.00 L to 20.00 L of composition per 500 L of water.

### Cooling test

The laboratory test to certify the cooling time delay was performed by bringing two liquids to a temperature of about 80 °C:
1) distilled water;
2) a water + additive solution of Example 2 in the prescribed minimum proportion of use, namely 1.50 every 500 litres of water.

Once the temperature of 80 °C was reached using the bain-marie system, the temperature was measured at regular time intervals as shown in the figure.

### EXAMPLES

Using the above preparation procedure, the following compositions were obtained.

### Example 1

- 1500 gr of citrus fruits, preferably lemon or pompia (*citrus monstruosa*);
- 5.00 litres of water;
- 1 kg of cane sugar.

Additive to be mixed in water in the proportion from 1.50 L to 20.00 L every 500 litres of water.

### Example 2

- 1500 gr of citrus fruits, preferably lemon or pompia (*citrus monstruosa*);
- 5.00 litres of water;
- 1 kg of cane sugar;
- 750 gr of propolis.

Additive to be mixed in water in the proportion of 1.50 L every 500 litres of water.

The composition of Example 2, wherein the citrus fruit is preferably lemon, was subjected to laboratory tests to certify the following properties:
- pH (value of 3.86);
- cooling test;
- to confirm the presence of natural acids (citric and acetic).

These laboratory tests were supplemented with field tests that confirmed the effectiveness of the weeding system.

The consumption varies between 3 and 8 litres/minute.

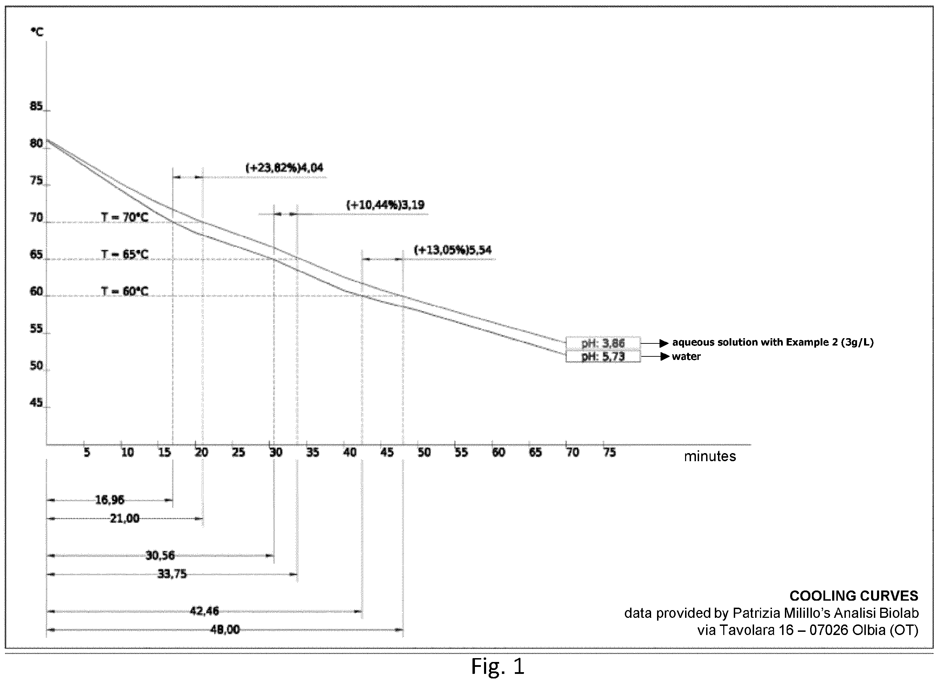

The results of the cooling tests carried out on the composition of Example 2, wherein the citrus fruit is preferably lemon, highlighted a different cooling time for the two liquids (water and aqueous composition comprising the composition of the invention) estimated at about + 15-20% in favour of the solution of the invention compared to distilled water alone (Fig. 1). This piece of data indicates that the composition is retained for more time on the plants, increasing the control and elimination of weeds and thus improving the thermal shock effect of steam weeding.

### Example 3

- 1500 gr of citrus fruits preferably pompia (*citrus monstruosa*);
- 5.00 litres of water;
- 1 kg of cane sugar;
- 750 gr of a mix of wax, honey and propolis.

Additive to be mixed in water in the proportion of 1.50 L per 500 litres of water.

An aqueous solution for the weeding system and/or method was obtained by diluting 1.50 L of the composition object of the present example every 500 L of water.

### Example 4: differences between steam weeding and evolved steam weeding through the use of the additive of Example 1 assessed through the delay in vegetative recovery of infesting plants

In the present Example, the effectiveness of the additive of Example 1 was tested, the use of which is aimed at enhancing the water steam weeding performance and can represent a valid alternative to the use of chemical products.

### DESCRIPTION OF THE AREA

The field tests were carried out at the Cocchiland Agricultural Company (Azienda Manca) located in Su Laccu Mannu 09032 Assemini (SU).

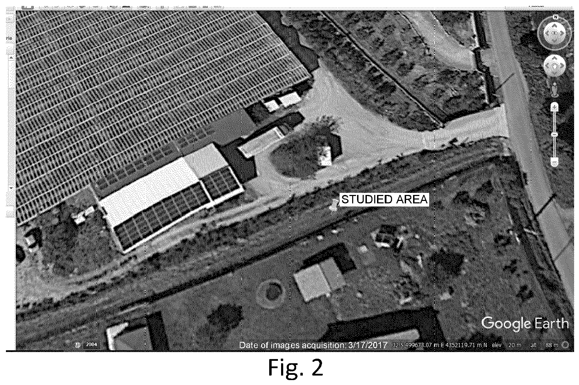

An area with homogeneous vegetation coverage was selected along a canal bordered to the north by a row of olive trees and to the south by a dividing fence, while from the east side to the west side there is an irrigation system for fruit plants. Beyond the fence to the south there is a green lawn area which is irrigated daily (Fig. 2).

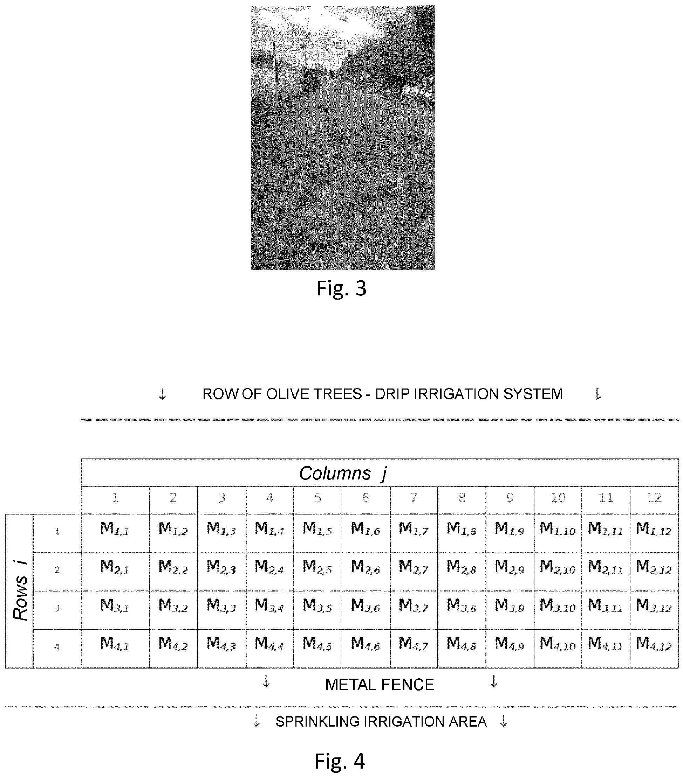

The vegetation of this area appears at different heights due to the presence of infesting plants of various species (Fig. 3).

### CHARACTERISATION OF THE VEGETATION

Over the selected area the characterisation of the present vegetation (Table A) was carried out through the collection of samples of the different plants and their determination with the use of the Flora of Italy manual (Vol. 1,2,3 Pignatti S., Guarino R., and La Rosa, M., 2017 Edition).

**Table A: Characterisation of the vegetation.**

| *Family* | *Species* |
|---|---|
| *Amaranthaceae* | *Amaranthus retroflexus* |
| *Apiaceae* | *Daucus carota* |
| *Asteraceae* | *Urospermum dalechampii* |
| *Asteraceae* | *Helminthotheca echioides* |
| *Asteraceae* | *Centaurea napifolia* |
| *Borraginaceae* | *Echium plantagineum* |
| *Fabaceae* | *Trifolium campestre* |
| *Gentianaceae* | *Centaurium erythraea* |
| *Malvaceae* | *Malva sylvestris* |
| *Poaceae* | *Elytrigia repens* |
| *Poaceae* | *Alopecurus myosuroides* |
| *Poaceae* | *Dactylis glomerata* |
| *Poaceae* | *Bumus sterilis* |
| *Poaceae* | *Avena fatua* |
| *Poaceae* | *Echinochloa crus-galli* |

### MATERIALS AND METHODS

On May 31^{st}, 2019, a field test was carried out to assess the significant differences in infesting weeds treatment through the simple steam system and the evolved one of the present invention obtained by using the steam of water + additive solution of Example 1 in different percentages. Specifically, the monitoring is designed for observing the differences in vegetative recovery of the plants after the two types of treatments, aimed at reducing the number of total seasonal treatments.

The various treatments were delivered in the field through the Bio Sistem Pump auto-dosing pump.

The union between water and additive of Example 1 forms a solution with variable %'s by volume obtained through different adjustments of the auto-dosing pump. The solution brought to the gas state by increasing the temperature is oriented on the infestants by means of a special gun.

To check the effects of the delay in vegetative recovery of the treated plants and attributable to the use of the additive of Example 1, a full field test was performed in a homogeneous area of size 6.00 m x 2.00 m, divided into 48 (forty-eight) parcels of size 0,50 m x 0,50 m (block diagram) obtaining in fact, a 12 (rows) x 4 (columns) matrix. Each parcel is identified with the letter Mi,j (where i indicates the row number and j the column number), as shown in Fig. 4.

The block diagram of Fig. 4 involves associating to each column a type of treatment providing a column without treatment every two treated to have a first comparison between a treated area and a natural one without treatments. Each column is identified with ribbons of different colours depending on the treatment that was carried out.

The various treatments were carried out on May 31^{st}, 2019 starting at 12:30 and ending at 14:00, with an average temperature of 18 °C and an average humidity of 80%.

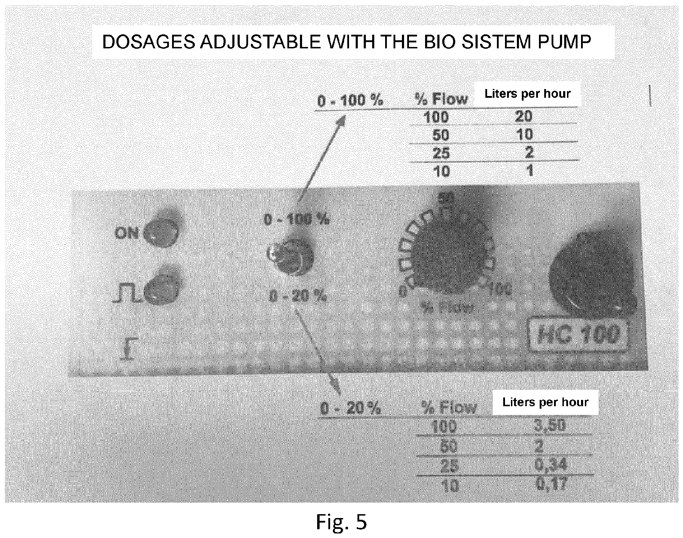

To preserve the homogeneity of the delivery of the water steam and the steam of water + additive solution of Example 1, the application was carried out always by the same operator, who adjusted the Bio Sistem Pump auto-dosing pump according to the different settings shown in Table B and Fig. 5.

**Table B: Delivery settings.**

| Dosage (by volume) | Flow (in volume) |
|---|---|
| 0 - 20% | 25.00% |
| | 50.00% |
| | 75.00% |
| | 100.00% |

The Bio Sistem Pump auto-dosing pump has the following requirements in its main features. A teflon membrane mounted on a piston driven by an electromagnet which in turn receives direct current pulses from the electrical system of the product. The piston work produces a pressure on the membrane itself, causing the suction valve to close and open. The flow one, instead, causes it to allow the delivery of the liquid present therein. A spring with an effect opposite to the magnet allows the piston to return to the initial position by recalling the liquid through the suction valve.

The treatments took place on each column following the ascending order of the row number. For example, in column 4 of Fig. 4 the order of the treated parcels is:

M_{1,4} → M_{2,4} → M_{3,4} → M_{4,4}

### FIELD SCHEME

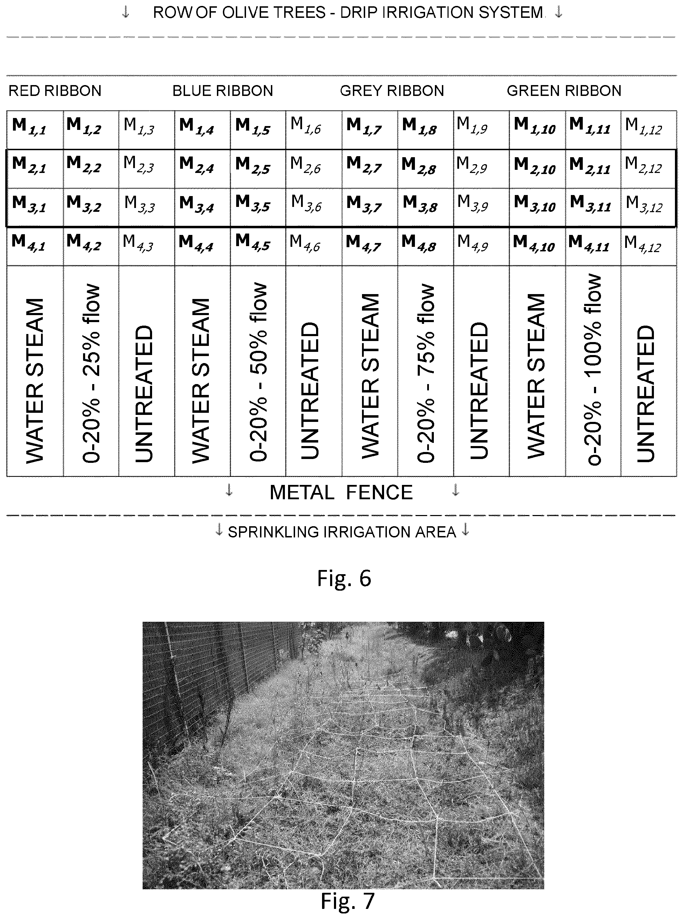

The field scheme is shown in Fig. 6.

To avoid the occurrence of contaminations of the additive of Example 1 due to residues in the dosage system, the operator first treated the columns with water steam alone and subsequently, the columns with steam of water + additive of Example 1 in the different adjustments for a total of 5 work stages:
STAGE 1- columns 1, 4, 7 and 10 with water steam alone;
STAGE 2 - column 2 with machine setting 0-20% - 25% Flow;
STAGE 3 - column 5 with machine setting 0-20% - 50% Flow;
STAGE 4 - column 8 with machine setting 0-20% - 75% Flow;
STAGE 5 - column 11 with machine setting 0-20% - 100% Flow.

The choice of having on each column 4 (four) similar interventions is to ensure a sufficient amount of observable data for each treatment.

The different additive percentages were adjusted by the operator, by using the knob which adjusts the product dosages of the Bio Sistem Pump auto-dosing pump.

The infestants inside the first parcels of the columns without treatment (parcels M_{4,3} - M_{4,6} - M_{4,9} - M_{4,12}), were eliminated by manual mowing to have a comparison also between these and the parcels treated with steam alone and with steam of water + additive of Example 1.

The operator during the delivery of the steam and the steam + additive of Example 1 stopped to treat each parcel for a time of 30 seconds. The temporal surveys were performed by the authors. Videos showing such treatments were also recorded.

It was considered appropriate, once the treatments were carried out and 62 (sixty-two) days passed, to take into account for the test only the parcels of rows 2 and 3 highlighted with the thicker border in the field scheme (Fig. 6).

This decision was made on the basis of the following considerations:
• the dispensing machine would seem to have a transitory stage in which the temperature and pressure at the outlet of the dispenser are not consistent with the data shown in the display;
• the parcels of row no. 4 were affected by the sprinkling irrigation of the ground beyond the metal fence as demonstrated by the colour and development of the plants in the areas outside the field scheme and adjacent to the metal fence network (Fig. 7).

### OBSERVATIONS ON THE DELAY IN VEGETATIVE RECOVERY

The slowdown of the vegetative recovery with respect to the different cultures was assessed through periodic monitoring with photographic surveys, carried out every 7 days starting from the first treatment (for a total of 8 observations), with a journal of symptoms and an estimate of their entity, where verifiable. The results were then used to carry out an assessment that would allow to estimate the significant differences between treatment with water steam alone and treatment with steam of water + additive of Example 1.

The first observation was made on May 31^{st}, 2019 immediately after treatment, while the last observation was made on August 1^{st}, 2019.

The monitoring of vegetative recovery was performed considering only the parcels highlighted by the thicker rectangle in the field scheme (Fig. 6).

### ON THE METEOROLOGICAL CONDITIONS

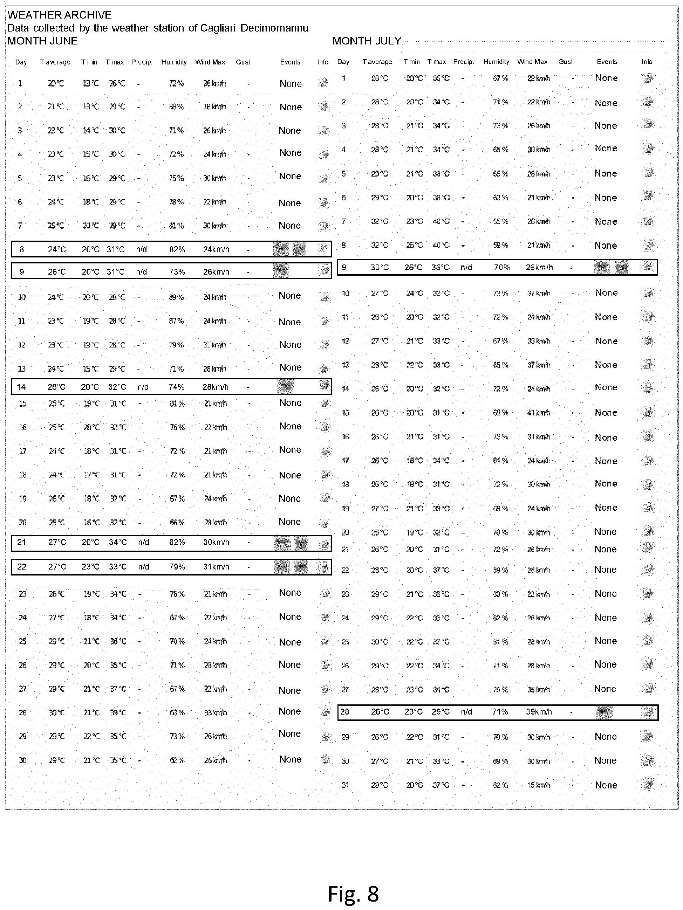

The observations made take into account the meteorological conditions. For these reasons, the data report of the Cagliari - Decimomannu (SU) station, for the reference area is reported. From the attached archive (Fig. 8) there result 6 (six) days with precipitation out of 62 (sixty-two) days of observation and with the following temperature values:

**Table C: Temperature values.**

| | T _{max,average} | T _{min,average} | T _{average} | Humidity |
|---|---|---|---|---|
| June | 31.70°C | 18.50°C | 25.30°C | 73.90% |
| July | 34.10°C | 21.20°C | 27.80°C | 67.20% |

### ON THE DIFFERENCES BETWEEN HAND MOWING AND STEAM SYSTEM

The comparison between the parcels treated with steam (both of water and of water + additive of Example 1) and the parcels treated with hand mowing highlighted how most of the plants treated with steam die and 62 (sixty-two) days later show a very slow regeneration. The vegetative recovery of the plants that survived the steam compared to that of the plants of the hand-mowed parcels highlights how the hand-mowed plants regenerated more quickly.

### ON THE DIFFERENCES BETWEEN THE WATER STEAM SYSTEM AND THE STEAM SYSTEM OF WATER + ADDITIVE OF EXAMPLE 1

In all the columns treated with water steam alone and steam of water + additive of Example 1 at different adjustments, a death of both the aerial part and the root part of most of the vegetable species could be observed, which in 62 (sixty-two) days of observation did not grow back.

The only plants that showed a vegetative recovery after treatment with water steam alone and steam of water + additive of Example 1, were the dicotyledonous plants *Helminthotheca echioides* and some monocotyledons ascribable to the *Poaceae family.* Therefore, for an analysis of the timing of vegetative recovery and growth, it was considered appropriate to take into account only these two types of plants, at the same phenological stage.

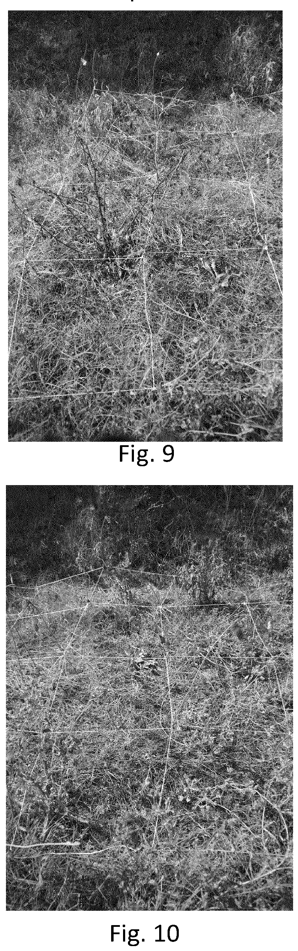

The comparison between *H. echioides* plants treated with water steam alone and the same plants treated with steam of water + additive of Example 1 dosage 0-20% - flow 25%, would seem not to highlight a difference in growth of the species between the two types of treatment (Fig. 9). In both treatments, after 62 (sixty-two) days, the plants show a vegetative recovery with a well-developed basal rosette characterized by the presence of several adult leaves. Moreover, both in the parcels treated with water steam alone and in the parcels treated with steam of water + additive of Example 1 dosage 0-20% - flow 25%, the presence of well-developed *Poaceae* is found.

The comparison between *H. echioides* plants treated with water steam alone and the same plants treated with steam of water + additive of Example 1 dosage 0-20% - flow 50%, showed also in this case a similar vegetative recovery in the two treatments of the *H. echioides* species.

The presence of *Poaceae* is found only in the parcels treated with steam alone.

In the parcels treated with steam of water + additive of Example 1 dosage 0-20% - flow 50%, the *Poaceae* did not develop again.

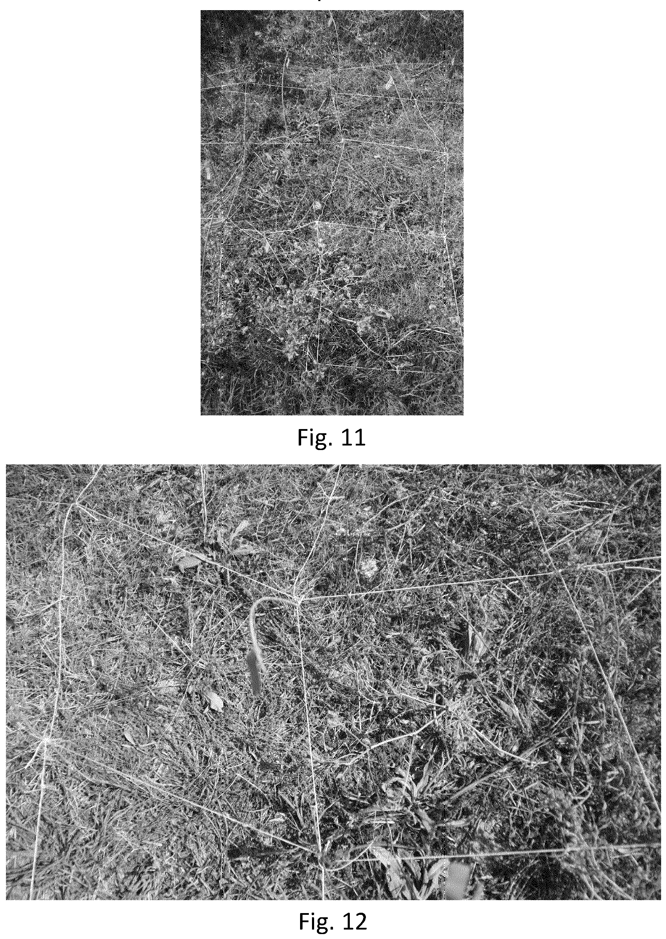

The comparison between *H. echioides* plants treated with water steam alone (column 7 of Fig. 6) and plants treated with steam of water + additive of Example 1 dosage 0-20%-75% flow, (column 8 of Fig. 6) highlights a difference in growth (Fig. 11 and 12). The plants treated with steam alone have also in this case a well-developed basal rosette with several leaves, while the plants treated with steam of water + additive of Example 1 dosage 0-20% - 75% flow, are smaller and with fewer leaves in rosette.

Also in this case the *Poaceae* are present only in the parcels treated with steam alone.

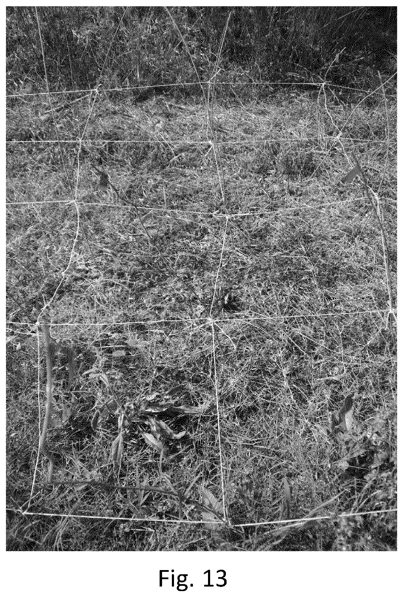

The comparison of *H. echioides* plants treated with steam alone (column 10 of Fig. 6) and the plants treated with steam of water + additive of Example 1 dosage 0-20% - 100% flow (column 11 of Fig. 6), shows a substantial visual difference in growth (Fig. 13). The plants treated with steam alone are also in this case well developed, with fluorishing leaves, while the plants treated with steam of water + additive of Example 1 dosage 0-20% - 100% flow are much smaller with young leaves. Furthermore, a reduced vegetative recovery in the area treated with steam alone is highlighted compared to the other areas treated analogously M_{i,1} - M_{i,4} - M_{i,7}. Said situation could be ascribed to a sort of drift effect that the area treated with water + additive of Example 1 may have induced in the neighbouring area.

In this case the presence of two different types of *Poaceae* in both treatments is found, but in the treatment with steam of water + additive of Example 1 these are young seedlings with small leaves.

### CONCLUSIONS

The tests carried out in the period from May 31^{st} to August 1^{st} highlighted that the treatments carried out showed significant differences after 62 (sixty-two) days from the first treatment. With this test, it was possible to more deeply characterize the action of the additive of Example 1 as a retardant of vegetative recovery of the plants in relation to the spontaneous weeds considered, in full field. It could be observed essentially that the two concentrations that have the most significant value on the delay in vegetative recovery visually observable after 62 (sixty-two) days of monitoring were: dosage 0-20% - 75% flow and dosage 0-20% - 100 % flow.

## Claims

1. Use of a liquid composition as additive for a weeding system, said composition comprising at least one agent selected from the group consisting of: natural acid, propolis, wax and honey, said composition being applied by steam delivery.

2. Use according to claim 1, wherein the composition further comprises sugar and/or water.

3. Use according to claim 2, wherein said sugar is cane sugar.

4. Use according to any of the preceding claims, wherein the natural acid derives exclusively from a fruit.

5. Use according to claim 4, wherein said fruit is a citrus fruit or a mixture of citrus fruits.

6. Use according to claim 5, wherein said citrus fruit is lemon (*citrus limon*) or pompia (*citrus monstruosa*).

7. Use according to any of the preceding claims, wherein the composition comprises or consists of: natural acid derived exclusively from a mixture of citrus fruits, water, sugar and optionally at least one agent selected from the group consisting of: propolis, honey, wax, and a mixture thereof.

8. Use according to any of the preceding claims, wherein the composition comprises or consists of:
- natural acid derived exclusively from a mixture of citrus fruits, sugar and water; or
- natural acid derived exclusively from a mixture of citrus fruits, sugar, propolis, and water; or
- natural acid derived exclusively from a mixture of citrus fruits, sugar, propolis, wax, honey and water.

9. Use according to any of the preceding claims, wherein the composition comprises or consists of:
- about 1500 g of citrus fruits, about 5.00 litres of water and about 1 kg of cane sugar; or
- about 1500 g of citrus fruits, about 5.00 litres of water, about 1 kg of cane sugar and about 750 g of propolis; or
- about 1500 g of citrus fruits, about 5.00 litres of water, about 1 kg of cane sugar and about 750 g of a mix of wax, honey and propolis.

10. Use according to any of the preceding claims, wherein steam delivery is performed by water and/or the composition is in an amount from about 1.00 to 25.00 L per every 500.00 L of water used to deliver steam.

11. Use according to any of the preceding claims, wherein the composition has a pH lower than or equal to 4.

12. Use according to any of the preceding claims, wherein the composition is applied at a temperature comprised between 100 °C and 160 °C.

13. Use according to any of the preceding claims, wherein the composition is applied at a pressure comprised between 20 and 80 bar.

14. Use according to any of the preceding claims, wherein the composition produces a time delay in the cooling process estimated at about 15-20%.

15. Use according to any of the preceding claims, wherein the composition produces a time delay of regermination compared to the use of steam alone.
